# EUROPÄISCHE PATENTSCHRIFT

(11) **EP 1 476 659 B1**
(45) Veröffentlichungstag und Bekanntmachung des Hinweises auf die Patenterteilung: **30.09.2009**
(21) Anmeldenummer: 03704591.1
(22) Anmeldetag: 12.02.2003
(51) Int. Cl.: F03D 11/04, F03D 1/02

(54) **WINDENERGIEANLAGE**
WIND ENERGY TURBINE
EOLIENNE

(30) Priorität: 14.02.2002 DE 10205988
(43) Veröffentlichungstag der Anmeldung: 17.11.2004
(73) Patentinhaber: Wobben, Aloys, 26607 Aurich (DE)
(72) Erfinder: Wobben, Aloys, 26607 Aurich (DE)
(74) Vertreter: Göken, Klaus G.
(86) Internationale Anmeldenummer: PCT/EP2003/001352
(87) Internationale Veröffentlichungsnummer: WO 2003/069156

(56) Entgegenhaltungen:
- WO-A-96/10130
- WO-A-98/32968

## Beschreibung

Die Erfindung betrifft eine Windenergieanlage bzw. die Errichtung einer solchen Windenergieanlage, insbesondere im Offshore-Bereich. Bei der bisher bekannten Errichtung von Windenergieanlagen wird zunächst ein Turm der Windenergieanlage gefertigt, wobei dieser Turm durch einen Stahlturm, Betonturm oder auch einen Gittermastturm gebildet wird. Nach Errichtung des Turms wird auf der Turmspitze ein Maschinenhaus errichtet und dieses Maschinenhaus umfasst dann die gesamte Gondel nebst Generator, Rotor und weiterer Teile. Ein solches Maschinenhaus mit daran befestigten Rotorblättern und einem damit verbundenen Generator wird nachfolgend als Rotoreinheit bezeichnet.

Nachdem die Rotoreinheit auf der. Turmspitze verankert ist und sämtliche für die Energieübertragung notwendigen Kabel verlegt sind, kann grundsätzlich mit dem Betrieb der Windenergieanlage begonnen werden, wobei anfangs noch Einstellungen vorzunehmen sind, damit ein optimaler Anlagenbetrieb gewährleistet ist.

Es ist auch schon vorgeschlagen worden, wie z.B. aus DE 44 13 688 oder Erich Hau, "Windkraftanlagen", 2. Auflage, Seite 30, Bild 2.6 bekannt - dass ein Turm einer Windenergieanlage nicht nur eine Rotoreinheit sondern mehrere Rotoreinheiten aufnehmen kann. Hierzu ist der Turm der Windenergieanlage als eine Tragkonstruktion vorgesehen, an der ihrerseits wiederum verschiedene Rotoreinheiten befestigt werden. WO9610130 offenbart eine Windenergieanlage wobei einzelne Rotorblätter mit einem Seil durch Rotornabe hochgezogen werden.

Es ist ersichtlich, dass die Errichtung einer solchen Windenergieanlage durchaus an Land mittels Einsetzen von Baukränen sicher durchgeführt werden kann, jedoch die Errichtung solcher Windenergieanlagen im Offshore-Bereich kaum mehr möglich ist, weil bei den sehr hohen Bauhöhen, 60m und mehr über dem Meeresspiegel, ein nahezu wellengangloses Wetter Grundvoraussetzung bei der Errichtung ist. Da gerade aber im Offshore-Bereich und damit auf hoher See solche Wetterbedingungen nur äußerst selten und dann auch sehr unzuverlässig anzutreffen sind, ist es Aufgabe der vorliegenden Erfindung, technische Maßnahmen vorzuschlagen, mittels denen die Errichtung von Offshore-Windenergieanlagen nahezu bei jedem Wetter möglich ist, auch dann, wenn geringer oder mittlerer Wellengang vorhanden ist.

Die Erfindung löst die vorgenannte Aufgabe durch eine konstruktive Maßnahme mit den Merkmalen nach Anspruch 1. Vorteilhafte Weiterbildungen sind in den Unteransprüchen beschrieben.

Bei der erfindungsgemäßen Windenergieanlage ist am Turm bzw. an der Turmspitze eine Tragkonstruktion drehbar gelagert angeordnet. Diese Tragkonstruktion kann nun soweit nach unten hin auf das Wasser zu geschwenkt werden, dass zwischen der Spitze des Trägers und dem Schiff, auf welchem die Rotoreinheit der Windenergieanlage angeordnet ist, eine möglichst geringe Entfernung besteht. Damit sind hochaufragende Kräne nicht mehr notwendig.

Wenn nunmehr die Windenergieanlage selbst auch noch über das Hebezeug für die Rotoreinheit verfügt, mit dem die auf dem Schiff gelagerte Rotoreinheit der Windenergieanlage anzuheben ist, kann die gesamte Rotoreinheit, also der Rotor mit den daran angebrachten Rotorblättern und ggf. dem damit verbundenen Maschinenhaus, an die Trägerspitze geführt und dort verankert werden. Hiernach kann wiederum der gesamte Träger in die gewünschte Position verschwenkt werden.

Wenn die gesamte Windenergieanlage eine Tragkonstruktion aufweist, welche aus mehreren Tragarmen besteht, kann die gesamte Windenergieanlage auch mehrere Rotoreinheiten aufnehmen, was zwar prinzipiell aus dem vorgenannten Stand der Technik bekannt ist, deren Errichtung jedoch mit den erfindungsgemäßen Maßnahmen nun sehr vorteilhaft möglich ist.

Es soll nicht vergessen werden, dass gerade bei der sehr starken Belastung von Windenergieanlagen im Offshore-Bereich von Zeit zur Zeit auch eine Wartung und unter Umständen auch ein Austausch bestimmter Elemente der Windenergieanlage durchgeführt werden muss. Wenn dann stets Schiffskräne eingesetzt werden müssten, ist u. U. eine solche Wartung bzw. ein Austausch von Elementen oder Teilen der Windenergieanlagen überhaupt nicht möglich, weil sich wochenlang nicht das entsprechende Wetter einstellt, das den zuverlässigen Einsatz von solchen Schiffskränen erlaubt.

Mit der erfindungsgemäßen Windenergieanlage entgegen kann auch bei eher rauem Wetter eine Wartung und u.U. auch im Bedarfsfall ein Austausch von Elementen der Windenergieanlage oder ganzer Rotoreinheiten erfolgen, in der diese mittels des Hebezeugs, welches die Windenergieanlage aufweist, auf dass entsprechende Wartungsschiff herabgelassen oder von dort heraufgeholt werden.

Hierzu wird bevorzugt der Trägerarm, auf dem die zu montierende Rotoreinheit liegen soll, in die Sechs-Uhr-Position verfahren, so dass zwischen dem Schiff (oder einer entsprechenden Bearbeitungsplattform, Ponton usw.) und der Trägerspitze ein möglichst geringer Abstand liegt.

Wenn die Tragkonstruktion als dreiarmiger Tragstern ausgebildet ist, wobei zwischen den Tragarmen des Sterns ein gleichbleibender Abstand (120°) gegeben ist, wird nach und nach jeder Tragarm in die Sechs-Uhr-Position gebracht und kann zunächst einmal mit den entsprechenden Rotoreinheiten bestückt werden.

Eine solche Windenergieanlage stellt dann, wenn jede Rotoreinheit über eine recht große Leistung verfügt, beispielsweise 1,5 MW bis 10 MW pro Rotoreinheit, bereits ein kleineres oder mittelgroßes Kraftwerk dar. Hierzu müssen zwar im Offshore-Bereich ganz erhebliche Maßnahmen für die Turmerrichtung getroffen werden, allerdings nur ein einziges Mal für eine erfindungsgemäße Windenergieanlage, auch wenn die gesamte Windenergieanlage zwei, drei oder mehrere Rotoreinheiten trägt. Dies ist dann erheblich kostengünstiger, als wenn pro Rotoreinheit ein eigener Turm errichtet werden muss.

Wenn während der Montage der Windenergieanlage z. B. die Tragarme am Drehlager angebracht werden, treten unvermeidbar große Drehmomente und damit entsprechend große Belastungen auf. Ein weiteres Problem ergibt sich, wenn z. B. nach der Montage des ersten Tragarmes das Drehlager in die Position für die Montage eines weiteren Tragarmes gedreht werden soll, weil dann der bereits montierte Tragarm zu Rückstellkräften führt, die von der Konstruktion sicher aufgenommen werden müssen.

Um diese aus den Drehmomenten resultierenden Belastungen zu beseitigen, können an dem Drehlager vor dessen Montage Gewichte angebracht werden, die ein Drehmoment bewirken, dass demjenigen eines Tragarmes entspricht. Bei einem Träger mit 3 jeweils um 120° gegeneinander versetzten Tragarmen bzw. Gewichten ist das resultierende Drehmoment dann nämlich stets Null.

Dabei sind abhängig vom Aufbauverfahren der Windenergieanlage unterschiedliche Gewichte erforderlich. Am Drehlager sind stets Gewichte anzubringen, die das gleiche Drehmoment erzeugen, wie Tragarm und Rotoreinheit zusammen. Werden Tragarm und Rotoreinheit ohne Veränderung der Position des Drehlagers nacheinander montiert, reichen diese Gewichte für den Montagevorgang aus.

Werden jedoch zunächst alle Tragarme nacheinander montiert, z. B. weil diese bereits vor den Rotoreinheiten zur Verfügung stehen, sind weiter Gewichte erforderlich. Diese Gewicht müssen ein Drehmoment entsprechend demjenigen der Rotoreinheit erzeugen und werden an den Tragarmen angebracht. Auf diese Weise können nach der Montage der Tragarme die Rotoreinheiten montiert werden - wiederum, ohne ein resultierendes Drehmoment zu erzeugen.

Gemäß einer bevorzuqten Weiterbildung der Erfindung umfasst die Abseilbzw. Hebevorrichtung wenigstens eine Umlenkrolle, oder aber einen Flaschenzug. Durch einen solchen Flaschenzug und natürlich ein darüber verlaufendes Seil kann ein Hebe- bzw. Abseilvorgang auch dann ausgeführt werden, wenn die für diesen Vorgang erforderliche Kraft z. B. bei Offshore-Anlagen von einer Maschine an Bord eines Schiffes abgegeben wird. Um Wellengang auszugleichen, kann dazu bevorzugt eine Mooring-Winde verwendet werden. Auf diese Weise lässt sich wenigstens eine Notfall-Hebe- bzw. Abseilvorrichtung schaffen, die auch dann noch entsprechende Arbeiten erlaubt, wenn ein in der Windenergieanlage vorhandener Antrieb ausgefallen ist. Um die Kosten für die Windenergieanlage zu verringern, kann so auch der Antrieb für die Hebe- bzw. Abseilvorrichtung eingespart wer-, den.

Vor allem aber erlaubt die erfindungsgemäße Konstruktion eine sehr günstige und wartungsfreundliche Errichtung als auch Pflege und damit auch den Austausch einzelner Teile der Windenergieanlage.

Müssen beispielsweise Teile einer Rotoreinheit überholt werden, wenn z.B. Rotorblätter ausgetauscht oder erneuert werden müssen, so kann nach Verschwenken der betroffenen Rotoreinheit in die Sechs-Uhr-Position die gesamte Einheit auf das entsprechende Schiff herabgelassen werden und dort oder an Land entsprechend überholt werden und hiernach kann die dann gewartete Rotoreinheit wieder in ihre Sollposition verfahren werden, wobei zur gleichen Zeit die Rotoreinheiten, die vom Service nicht betroffen sind, weiter in Betrieb sind, und dass sogar auf einem sehr hohen Niveau oberhalb der Wasserlinie, so dass die verbleibenden Rotoreinheiten insgesamt einem stärkerem Wind als üblich ausgesetzt sind.

Der gesamte Träger liegt bevorzugt in einer Ebene, ist versetzt zum Turm drehbar und darüber hinaus wiederum um den Turm schwenkbar gelagert. Gleichfalls können auch die einzelnen Rotoreinheiten einen gewünschten Azimutwinkel (die Winkel um die Trägereinheit) einnehmen. Damit können alle Rotoreinheiten in die jeweils gewünschte Position zum Wind gefahren werden, so dass stets ein optimaler Energieertrag erzielt wird.

Die Erfindung ist nachfolgend anhand eines in den Zeichnungen dargestellten Ausführungsbeispiels näher erläutert.
Figur 1 zeigt die Vorderansicht einer erfindungsgemäßen Windenergieanlage im Offshore-Bereich.
Figur 2 zeigt die Vorderansicht einer erfindungsgemäßen Windenergieanlage in Montageposition einer Rotoreinheit.
Figur 3 zeigt die in Figur 2 dargestellte Windenergieanlage in der Seitenansicht.
Figur 4 zeigt die in Figur 3 dargestellte Windenergieanlage während der Montage einer Rotoreinheit.

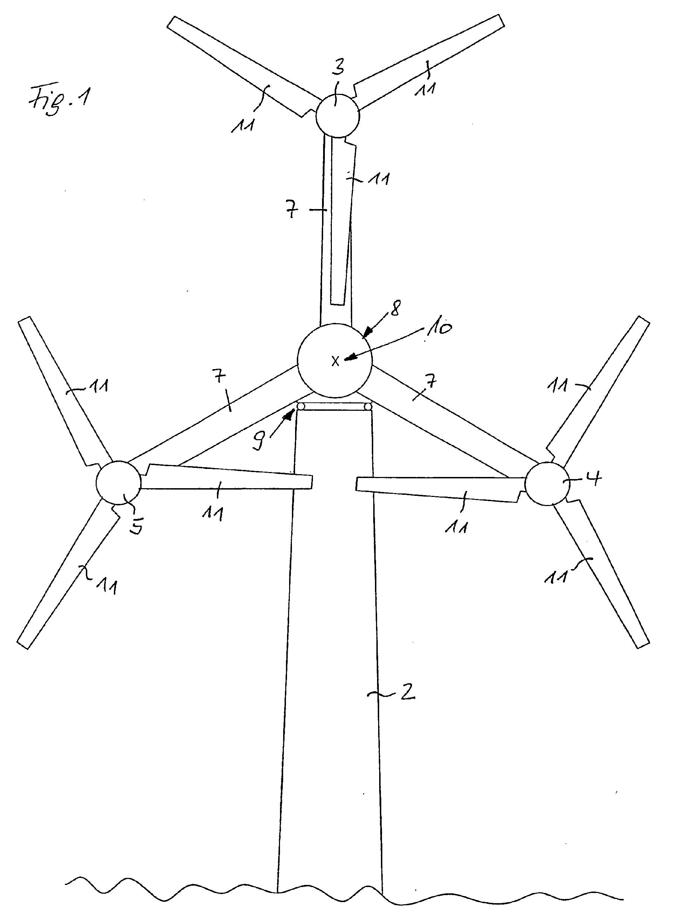

In Figur 1 ist in Vorderansicht eine Offshore-Windenergieanlage dargestellt, die aus einem Turm 2 und drei Rotoreinheiten 3, 4, und 5 besteht. Jede Rotoreinheit verfügt über den gleichen Aufbau. Die Rotoreinheiten werden von einem Träger aufgenommen, welcher seinerseits als Tragstern 7 ausgebildet ist und welcher drehbar auf der Spitze des Turms 2 gelagert ist. Das entsprechende Drehlager 8 ist ebenso angedeutet wie das Azimutlager 9, mittels dem der gesamte Träger um den Turm herum geschwenkt (gedreht) werden kann. Nicht dargestellt sind die entsprechenden Antriebe zum Drehen des Trägers um den Trägermittelpunkt 10 und zum Verschwenken des Trägers um die Turmachse. Für solche Antriebe können jedoch übliche Motorenantriebe, beispielsweise elektromotorische Antriebe, die auf entsprechende motorische Kräfte ausgelegt sind, eingesetzt werden.

Jede Rotoreinheit 3, 4 und 5 besteht aus einem Rotor mit daran angebrachten Rotorblättern und auch aus einem jeweils damit verbundenen Generator (nicht dargestellt). Die Konstruktion ist von üblichen Windenergieanlagen z.B. dem Typ E-40, E-66 der Firma Enercon bereits bekannt. Darüber hinaus besteht jede Rotoreinheit auch aus den üblichen Vorrichtungen zum Betrieb der gesamten Rotoreinheit und die Rotorblätter 11 eines Rotors sind im Anstellwinkel zum Wind veränderbar (Pitcheinstellung), wozu entsprechend bekannte Pitcheinstellungsvorrichtungen (nicht dargestellt) eingesetzt werden.

Die von jeder Rotoreinheit erzeugte elektrische Leistung wird entweder über einen Umrichterstrang, der jedem Rotor zugeordnet ist oder über einen zentralen Umrichterstrang (ein Umrichterstrang umfasst einen Gleichrichter, Gleichspannungszwischenkreis und einen nachgeschalteten Wechselrichter) weiterverarbeitet bzw. abgeführt, beispielsweise auch zu einer Transformatoreinheit, mittels der die erzeugte elektrische Energie auf ein gewünschtes Spannungsniveau gehoben wird.

Wenn nun eine wie in Figur 1 dargestellte Windenergieanlage errichtet wird, müssten mit den bisher bekannten Mitteln mittels Kranschiffen die jeweiligen Teile einer Rotoreinheit auf die Trägerspitzen bzw. das dort angeordnete Maschinenhaus gesetzt werden.

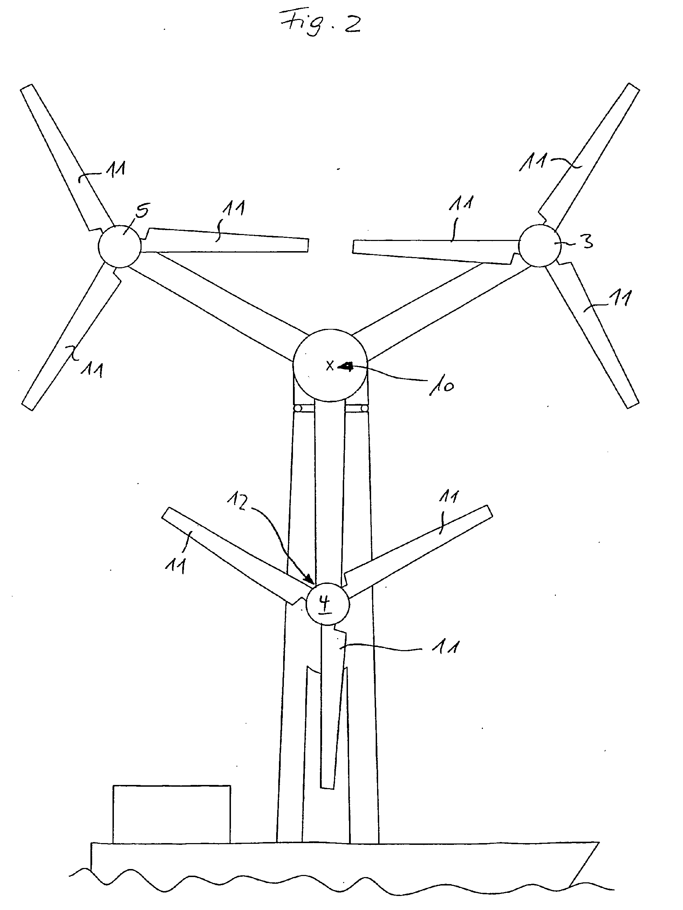

Zur Montage einer erfindungsgemäßen Windenergieanlage kann jedoch der gesamte Träger um seine Trägermittelachse 10 verschwenkt werden, so dass - wie in Figur 2 dargestellt - ein Trägerarm in die Sechs-Uhr-Position (also vertikal nach unten auf die Wasserebene gerichtet) ausgerichtet ist. Dadurch ergibt sich ein geringstmöglicher Abstand zwischen der Spitze des Trägerarms 7 und dem Schiff, welches Rotoreinheit für die Montage an der Windenergieanlage aufnimmt.

Die gesamte Rotoreinheit kann beim Anheben mittels der Abseilvorrichtung als Hebezeug an die Tragarmspitze 12 herangeführt werden, wobei dass Hebezeug in der Windenergieanlage selbst ausgebildet ist und somit ein Schiffskran nicht unbedingt erforderlich ist. Dieses Hebezeug besteht aus einem entsprechend ausgelegten Seilzug welcher aus ein oder mehreren Seilen besteht, die durch den Tragarm 7, der seinerseits innen hohl ausgebildet ist, geführt ist. Die gesamte Rotoreinheit werden mittels des Hebezeugs vom Schiff angehoben oder dorthin abgelassen. Ist die Rotoreinheit am Tragarm 7 montiert, wird dieser (nach Montage der ersten Rotoreinheit) weiter verdreht werden bis der nächste Tragarm 7 sich in der Sechs-Uhr-Position befindet usw. bis also sämtliche Rotoreinheiten am Tragarm montiert sind.

Hiernach kann die gesamte Tragkonstruktion wie in Figur 1 verschwenkt werden, so dass die einzelnen Rotoreinheiten 3, 4, 5 insgesamt eine maximale Höhe über dem Meeresspiegel aufweisen.

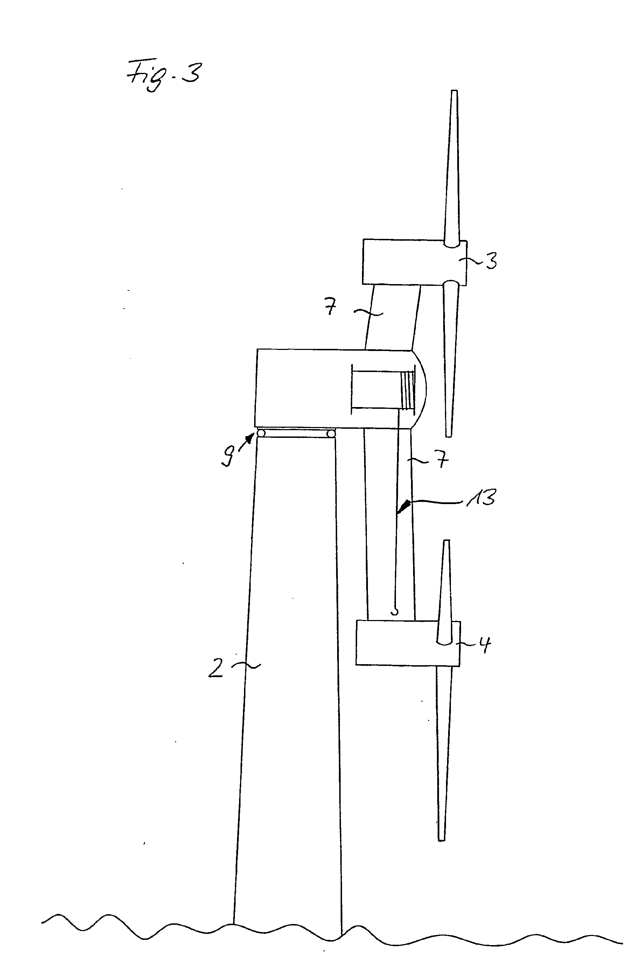

Figur 3 zeigt in der Seitenansicht die in Figur 2 dargestellte Anordnung, wobei zu erkennen ist, dass der Träger mit den daran angebrachten Tragarmen 7 in einer Ebene seitlich versetzt zum Turm 2 liegt und somit mittels des Azimutlagers 9 um den Turm herum geschwenkt werden kann. In Figur 3 ist auch ein als Seilzug ausgebildetes Hebezeug 13 zu erkennen, wobei eine Seilaufnahmerolle 14 innerhalb des Trägers ausgebildet ist und das davon aufgenommene Seil 13 selbst durch die hohl ausgebildeten Tragarme 7 geführt wird, um die Rotoreinheiten 3, 4, 5 oder deren wesentliche Teile zu tragen. Es versteht sich von selbst, dass grundsätzlich jeder Tragarm 7 mit einem eigenen Seil ausgebildet werden kann, welches je nach Positionierung der Tragarme 7 in diese herabgelassen wird.

Im dargestellten Beispiel weisen die einzelnen Rotoreinheiten 3, 4, 5 selbst kein Azimutlager mehr bezüglich der Tragarme 7 auf, so dass also die gesamte Einstellung der Tragarme 7 zum Wind über das einzige Azimutlager 9 erfolgt. Im Bedarfsfall kann jedoch auch am Übergang zwischen einer Rotoreinheit 3, 4, 5 und einem Tragarm 7 ein eigenes Azimutlager ausgebildet werden (wie das Azimutlager bei bisher bekannten Anlagen zwischen dem Maschinenhaus und dem Turm einer Windenergieanlage).

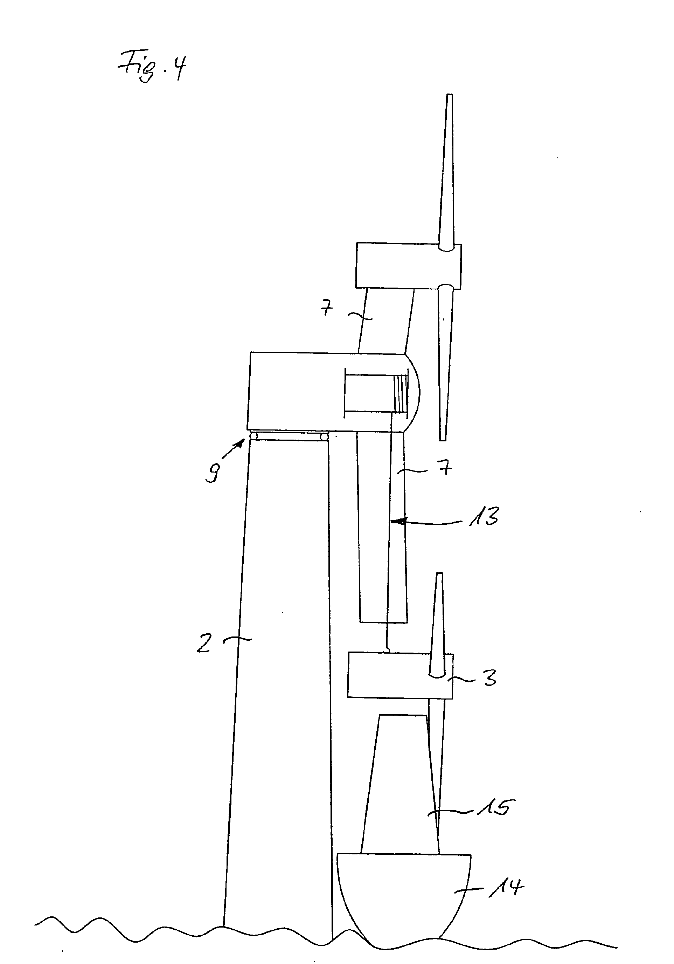

Figur 4 zeigt eine Skizze bei Montage einer erfindungsgemäßen Windenergieanlage. Hierbei nimmt ein Schiff 15 mit einem Hilfsträger 16 eine Rotoreinheit 3 auf. Nachdem das Hebezeug an dieser Rotoreinheit 3 verankert worden ist, wird die gesamte Rotoreinheit 3 nach oben gezogen (im Bedarfsfall um einen gewünschten Winkel geschwenkt) und kann dann am Tragarm 7 befestigt werden.

Sollte aus Wartungsgründen oder aus sonstigen Gründen eine gesamte Rotoreinheit oder wesentliche Teile hiervon überholt werden müssen, kann über das Hebezeug entsprechend die gesamte Rotoreinheit 3 oder wesentliche Teile hiervon auf das Wartungsschiff 15 herabgelassen werden, auf welchen dann die Wartung selbst durchgeführt wird oder die dann das zu überholende Element an Land verfrachtet.

Wenn bei der Wartung eine Rotoreinheit 3 abgenommen werden muss, können die beiden weiteren - sich dann in 10- und 2- Uhr-Position befindlichen- Rotoreinheiten weiter betrieben werden, so dass immer noch ein maximal möglicher Strom- und Leistungsertrag gewährleistet ist.

Die Erfindung ist besonders vorteilhaft einzusetzen bei Windenergieanlagen mit großer Leistung d.h. also bei Windenergieanlagen die insgesamt über eine Leistung von beispielsweise 8 MW bis 30 MW verfügen.

Weist jede einzelne Rotoreinheit beispielsweise eine Leistung von 4 MW bis 5 MW auf, kann mit der erfindungsgemäßen Windenergieanlage insgesamt eine Leistung von 12 MW bis 15 MW in dem Betrieb bereit gestellt werden.

Während des Betriebs einer solchen Windenergieanlage ist darauf zu achten, dass der Minimalabstand zwischen der einzelnen Rotorblattspitze (in Sechs-Uhr-Position des betroffenen Rotorblattes) auf den Meeresspiegel eine gewisse Mindesthöhe (z.B. 50m) nicht unterscheidet. Damit ist eine Kollision für den üblichen Schiffsverkehr ausgeschlossen.

Die dargestellte Windenergieanlage hat durch ihre Größe auch den Vorteil, dass sie eher als bisher übliche Windenergieanlagen und deren Türme auch die notwendigen Räumlichkeiten für das Wartungs- und Servicepersonal aufnehmen kann. Leicht wird nämlich übersehen, dass die Windenergieanlagen im Offshore-Bereich nicht nur betrieben, sondern auch vom entsprechenden Personal bedient werden müssen. Einem solchen Personal muss ein entsprechendes soziales Umfeld wie Räume (Gemeinschaftsräume, Küchen, Schlafräume, Werkstatt etc. ) zur Verfügung gestellt werden. Eine solche Einrichtung ist bei sehr großen Türmen viel einfacher möglich als bei relativ kleinen Türmen mit relativ geringen Durchmessern.

Auch sind die Kosten für einen einzelnen Turm - auch wenn dieser sehr groß ist - deutlich geringer als für die Errichtung von drei Türmen, zumal jeder einzelne Turm über ein eigenes Fundament verfügen muss und nur selten im Offshore-Bereich für jeden Turm das gleiche Fundament (gleiche Tiefe usw.) für verschiedene Anlagen eines Offshore-Windparks vorausgesetzt werden darf.

Zur Erhöhung der Stabilität des Trägers kann es auch sinnvoll sein, dass die Tragarme miteinander verspannt sind.

## Patentansprüche

1. Windenergieanlage mit einem Turm (2), der einen an einem Drehlager (8) gelagerten Träger (7) aufnimmt, wobei der Träger (7) seinerseits wenigstens eine Rotoreinheit (3) aufnimmt, die in einer Ebene versetzt zum Turm liegt und der Trager (7) so zu positionieren ist, dass die Rotor einheit (3) auf einem tiefstmöglichen Punkt positionierbar ist dass eine Abseilvorrichtung (13) vorgesehen ist, mittels welcher die Rotoreinheit/vom Träger (7) abgelassen und zur Befestigung an diesen heranführbar ist und dass die Abseilvorrichtung (13) innerhalb des Trägers (7) ausgebildet ist.

2. Windenergieanlage nach Anspruch 1,
**dadurch gekennzeichnet, dass** der Träger (7) sternförmig ausgebildet ist und drei Tragarme aufweist, die in einem gleichen Winkel (120°) voneinander beabstandet an dem Drehlager (8) angeordnet sind.

3. Windenergieanlage nach Anspruch 1,
**dadurch gekennzeichnet, dass** die Abseilvorrichtung (13) wenigstens eine Umlenkrolle umfasst.

4. Windenergieanlage nach einem der vorstehenden Ansprüche,
**dadurch gekennzeichnet, dass** die Abseilvorrichtung (13) einen Seilzug umfasst und dass jeder Tragarm innen hohl ausgebildet ist und innerhalb des Tragarms das Seil beim Herablassen der Rotoreinheit oder beim Anheben der Rotoreinheit zum Heranführen an den Tragarm verläuft.

5. Windenergieanlage nach einem der vorstehenden Ansprüche, **gekennzeichnet durch** aus wenigstens zwei Sektionen bestehende Tragarme.

6. Windenergieanlage nach einem der vorstehenden Ansprüche,
**dadurch gekennzeichnet, dass** jeder Tragarm bzw. jede Tragarm-Sektion Befestigungseinrichtungen für die Abseilvorrichtung (13) aufweist.

7. Windenergieanlage nach einem der vorhergehenden Ansprüche,
**dadurch gekennzeichnet, dass** die Länge jedes Tragarms etwa 50m bis 80m und der Durchmesser eines Rotors etwa 100m bis 140m beträgt.

8. Windenergieanlage nach einem der vorhergehenden Ansprüche,
**dadurch gekennzeichnet, dass** die Rotoreinheit (3) aus einem Rotor mit daran angebrachten Rotorblättern wie mit dem Rotor gekoppelten Maschinenhaus besteht, welches wenigstens einen Generator aufweist, welcher mit dem Rotor verbunden ist und welcher durch Drehung des Rotors angetrieben wird.

9. Windenergieanlage nach einem der vorhergehenden Ansprüche,
**dadurch gekennzeichnet, dass** zur Drehung des Trägers (7) ein Antrieb vorgesehen ist.

10. Verfahren zur Errichtung einer Windenergieanlage nach einem der Ansprüche 1 - 9,
**dadurch gekennzeichnet, dass** bei Errichtung zunächst ein Träger (7) in etwa eine Sechs-Uhr-Position bewegt wird und dann die Rotoreinheit (3) mit Hilfe der Abseilvorrichtung (13) auf die Trägevspitze geführt und dort verankert wird und dass anschließend der Träger (7) in die für ihn vorgesehene Betriebsposition geschwenkt wird.

11. Verfahren zur Errichtung einer Windenergieanlage nach Anspruch 10,
**gekennzeichnet durch** die Schritte:
- lösbare Montage eines Gewichts an einem Flansch des Drehlagers (8)
- Anbringen des Drehlagers (8) an der Spitze des Turmes (2);
- Positionieren des Drehlagers (8) in einer vorgegebenen Position;
- Austausch des am Flansch des Drehlagers (8) angeordneten Gewichts mit einem Tragarm und einer Rotoreinheit (3) **durch** Demontage des Gewichts und anschließende Montage des Tragarms und daran anschließende Montage der Rotoreinheit (3).

12. Verfahren zur Errichtung einer Windenergieanlage nach Anspruch 10,
**gekennzeichnet durch** die Schritte:
- lösbare Montage eines ersten Gewichts an einem Flansch des Drehlagers (8);
- lösbare Montage eines zweiten Gewichts an einem Flansch des Tragarms;
- Anbringen des Drehlagers (8) an der Spitze des Turmes (2);
- Positionieren des Drehlager (8) in einer vorgegebenen Position;
- Austausch des am Flansch des Drehlagers (8) angeordneten ersten Gewichts mit einem Tragarm **durch** Demontage des ersten Gewichts und anschließende Montage des Tragarms;
- Positionieren des Drehlager (8) mit dem Tragarm in einer vorgegebenen Position;
- Austausch des am Flansch des Tragarms angeordneten zweiten Gewichts mit einer Rotoreinheit **durch** Demontage des Gewichts und anschließende Montage der Rotoreinheit. (3)

## Claims

1. Wind power installation with a tower (2) that receives a support (7) supported on a rotary bearing (8), wherein the support (7) in turn receives at least one rotor unit (3) that is in a plane offset from the tower, and the support (7) is to be positioned such that the rotor unit (3) can be positioned at a lowest possible point, a lowering cable device (13) is provided by means of which the rotor unit (3) is lowered from the support (7) and, for fastening, can be brought to the support, and the lowering cable device (13) is formed inside the support (7).

2. Wind power installation according to claim 1,
**characterised in that** the support (7) is star-shaped and has three support arms disposed on the rotary bearing (8) and spaced apart at equal angles (120°) to one another.

3. Wind power installation according to claim 1,
**characterised in that** the lowering cable device (13) includes at least one pulley.

4. Wind power installation according to any one of the preceding claims,
**characterised in that** the lowering cable device (13) includes a cable pull, and each support arm is hollow inside and the cable runs inside the support arm when the rotor unit is lowered or when the rotor unit is raised to bring it to the support arm.

5. Wind power installation according to any one of the preceding claims,
**characterised by** support arms comprised of at least two sections.

6. Wind power installation according to any one of the preceding claims,
**characterised in that** each support arm and each support arm section has attachment means for the lowering cable device (13).

7. Wind power installation according to any one of the preceding claims,
**characterised in that** the length of each support arm is approximately from 50 m to 80 m and the diameter of a rotor is approximately from 100 m to 140 m.

8. Wind power installation according to any one of the preceding claims,
**characterised in that** the rotor unit (3) is comprised of a rotor with rotor blades attached thereto and a machine house coupled to the rotor, which machine house has at least one generator connected to the rotor and driven by rotation of the rotor.

9. Wind power installation according to any one of the preceding claims,
**characterised in that** a drive is provided for rotating the support (7).

10. Method for erecting a wind power installation according to any one of claims 1 to 9,
**characterised in that** during erection first a support (7) is moved to approximately a six o'clock position and then the rotor unit (3) is guided onto the tip of the support by means of the lowering cable device (13) and is anchored there, and the support (7) is subsequently swung into its intended operating position.

11. Method for erecting a wind power installation according to claim 10,
**characterised by** the steps of:
- detachably mounting a weight on a flange of the rotary bearing (8);
- attaching the rotary bearing (8) to the top of the tower (2);
- positioning the rotary bearing (8) in a predetermined position;
- replacing the weight disposed on the flange of the rotary bearing (8) by a support arm and a rotor unit (3) by detaching the weight and then mounting the support arm followed by mounting of the rotor unit (3).

12. Method for erecting a wind power installation according to claim 10,
**characterised by** the steps of:
- detachably mounting a first weight on a flange of the rotary bearing (8);
- detachably mounting a second weight on a flange of the support arm;
- attaching the rotary bearing (8) to the top of the tower (2);
- positioning the rotary bearing (8) in a predetermined position;
- replacing the first weight disposed on the flange of the rotary bearing (8) by a support arm by detaching the first weight and then mounting the support arm;
- positioning the rotary bearing (8) together with the support arm in a predetermined position;
- replacing the second weight disposed on the flange of the support arm by a rotor unit by detaching the weight and then mounting the rotor unit (3).

## Revendications

1. Installation d'énergie éolienne avec une tour (2) qui accueille un support (7) logé dans un coussinet de pivotement (8), le support (7) accueillant pour sa part au moins une unité de rotor (3) qui se trouve dans un plan décalé par rapport à la tour, le support (7) devant être positionné de manière à ce que l'unité de rotor (3) soit positionnable en un point le plus bas possible et en ce qu'un dispositif de descente(13) est prévu grâce auquel l'unité de rotor (3) est enlevée du support (7) et peut être amenée pour une fixation sur ce dernier et en ce que le dispositif de descente (13) est configuré à l'intérieur du support (7).

2. Installation d'énergie éolienne selon la revendication 1, **caractérisée en ce que** le support (7) est configuré en étoile et présente trois bras supports qui sont disposés sur le coussinet de pivotement (8) étant éloignées d'un angle égal (120°) l'un par rapport à l'autre.

3. Installation d'énergie éolienne selon la revendication 1, **caractérisée en ce que** le dispositif de descente (13) comprend au moins un rouleau de renvoi.

4. Installation d'énergie éolienne selon l'une des revendications qui précèdent, **caractérisée en ce que** le dispositif de descente (13) comprend un câble sous gaine et que chaque bras support est creux à l'intérieur que dans le bras support, le câble lors de la descente de l'unité de rotor ou lors du relevage de l'unité du rotor, se déplace pour être amené sur le bras support.

5. Installation d'énergie éolienne selon l'une des revendications qui précèdent, **caractérisée par** des bras support comportant au moins deux sections.

6. Installation d'énergie éolienne selon l'une des revendications qui précèdent, **caractérisée en ce que** chaque bras support ou chaque section de bras support présente des dispositifs de fixation pour le dispositif de descente (13).

7. Installation d'énergie éolienne selon l'une des revendications qui précèdent, **caractérisée en ce que** la longueur de chaque bras support est d'environ 50m à 80m et que le diamètre d'un rotor est de 100m à 140m environ.

8. Installation d'énergie éolienne selon l'une des revendications qui précèdent, **caractérisée en ce que** l'unité de rotor (3) est constituée d'un rotor avec des pales de rotor montées dessus comme avec la salle de machines associée au rotor, laquelle comprend au moins un générateur qui est relié au rotor et qui est entraîné par la rotation du rotor.

9. Installation d'énergie éolienne selon l'une des revendications qui précèdent, **caractérisée en ce qu'**un entraînement est prévu pour la rotation du support (7).

10. Procédé pour l'érection d'une installation d'énergie éolienne selon l'une des revendications 1 à 9, **caractérisé en ce que** lors de l'érection, un support (7) est d'abord amené dans une position à six heures et que l'unité de rotor (3) est ensuite amenée, avec l'aide du dispositif de descente (13) sur la pointe du support pour y être ancrée et **en ce que** le support (7) est ensuite abaissé dans la position d'exploitation prévue pour lui.

11. Procédé pour l'érection d'une installation d'énergie éolienne selon la revendication 10, **caractérisé par** les étapes suivantes :
- montage détachable d'un poids sur une bride du coussinet de pivotement (8);
- amenée du coussinet de pivotement (8) sur la pointe de la tour (2);
- positionnement du coussinet de pivotement (8) dans une position prédéterminée;
- échange du poids disposé sur la bride du coussinet de pivotement (8) avec un bras support et une unité de rotor (3) par démontage du poids et montage consécutif du bras support avec montage consécutif de l'unité de rotor (3).

12. Procédé pour l'érection d'une installation d'énergie éolienne selon la revendication 10, **caractérisé par** les étapes suivantes :
- montage détachable d'un premier poids sur une bride du coussinet de pivotement (8);
- montage détachable d'un deuxième poids sur une bride du coussinet de pivotement (8);
- amenée du coussinet de pivotement (8) sur la pointe de la tour (2)
- positionnement du coussinet de pivotement (8) dans une position prédéterminée;
- remplacement du premier poids disposé sur la bride du coussinet de pivotement (8) avec un bras support par démontage du premier poids et montage consécutif du bras support;
- positionnement du coussinet de pivotement (8) avec le bras support dans une position prédéterminée;
- remplacement du deuxième poids disposé sur la bride du bras support avec une unité de rotor par démontage du poids et montage consécutif de l'unité de rotor (3).
